**Europäisches Patentamt**

(19) **European Patent Office**

**Office européen des brevets**

(11) Numéro de publication: **0 119 878**

**B1**

(12) **FASCICULE DE BREVET EUROPÉEN**

(45) Date de publication du fascicule du brevet:
05.11.86

(21) Numéro de dépôt: **84400253.5**

(22) Date de dépôt: **07.02.84**

(51) Int. Cl.⁴: **B 60 C 27/16**, B 60 C 27/20

(54) **Dispositif antidérapant pour bandage pneumatique de véhicule automobile.**

(30) Priorité: **16.02.83 FR 8302527**

(43) Date de publication de la demande:
**26.09.84 Bulletin 84/39**

(45) Mention de la délivrance du brevet:
**05.11.86 Bulletin 86/45**

(84) Etats contractants désignés:
**AT BE CH DE GB IT LI LU NL SE**

(56) Documents cité:
**DE-A-2 449 485**
**DE-A-2 907 903**
**FR-A-371 288**
**FR-A-384 779**
**FR-A-2 052 061**
**FR-A-2 377 897**
**FR-A-2 421 767**
**FR-A-2 451 280**

(73) Titulaire: **Sepheriades, Jean, 46 bis, route de**
**Croissy, F-78110 Le Vesinet (FR)**
Titulaire: **Lecharpy, Joel, 40, rue de Mauregard,**
**F-78690 Levis St Nom (FR)**

(72) Inventeur: **Sepheriades, Jean, 46 bis, route de**
**Croissy, F-78110 Le Vesinet (FR)**
Inventeur: **Lecharpy, Joel, 40, rue de Mauregard,**
**F-78690 Levis St Nom (FR)**

(74) Mandataire: **Moulines, Pierre, Cabinet BEAU de**
**LOMENIE 55, rue d'Amsterdam, F-75008 Paris (FR)**

LIBER, STOCKHOLM 1986

## Description

La présente invention a pour objet un dispositif antidérapant pour bandage pneumatique de véhicule automobile.

Il est connu d'utiliser des dispositifs antidérapants tels que des chaînes ou des moyens comportant des organes augmentant l'adhérence au sol, qui sont montés sur des bandages pneumatiques pour permettre aux véhicules automobiles de rouler sur un sol glissant recouvert notamment de neige ou de verglas.

On connaît ainsi par le document DE-A-2 449 485 un dispositif du type selon le préambule de la revendication 1 comportant deux brins d'un câble, reliés à leurs extrémités par un moyen d'accrochage, lesdits brins étant disposés parallèlement autour de la bande pneumatique pour fermer des câbles sans fin après accrochage; plusieurs crampons, séparés entre eux par des entretoises, sont engagés sur lesdits brins.

Toutefois, les dispositifs connus sont réalisés pour une dimension de bandage pneumatique déterminée et ne peuvent s'adapter à tous les pneumatiques.

Par ailleurs, la mise en place des dispositifs antidérapants actuels est souvent compliquée et demande un temps assez long pour un utilisateur souvent inexpérimenté.

Le but de l'invention est de remédier à ces inconvénients et de proposer un dispositif antidérapant permettant un engagement sélectif des crampons en fonction de la largeur de la bande pneumatique.

Conformément à la présente invention, les crampons sont formés de plusieurs paires de demi-crochets, lesdits demi-crochets disposés par paires symétriquement par rapport au plan longitudinal de la roue comportant chacun une première branche en appui contre la bande de roulement du bandage et une autre branche qui est en appui pour l'un des demi-crochets contre l'un des flancs du bandage et pour l'autre demi-crochet contre l'autre flanc du bandage pneumatique. Les brins sont disposés dans des trous longitudinaux situés dans les premières branches des demi-crochets et dans les entretoises qui sont en contact avec la bande de roulement du bandage et les premières branches présentent une série de trous de nombre supérieur au nombre de brins.

Le dispositif antidérapant suivant l'invention est polyvalent et peut être utilisé facilement en dépannage en raison de sa mise en place rapide. En effet, la constitution du dispositif est modulaire, ce qui permet un ajustement des éléments constitutifs en fonction du bandage pneumatique à équiper.

D'autre part, selon une disposition avantageuse, l'utilisation d'un levier de verrouillage et d'une boucle permet d'obtenir un moyen de verrouillage de sécurité tout à fait aisé à utiliser.

Enfin l'appui du dispositif sur le sol diminue considérablement les vibrations et par conséquent les bruits de roulement.

D'autres caractéristiques et avantages de l'invention seront mieux compris à la lecture de la description qui va suivre de plusieurs modes de réalisation et en se référant au dessin annexé, sur lequel:

- la figure 1 est une vue en perspective d'un dispositif antidérapant suivant l'invention monté sur un bandage pneumatique;
- la figure 2 est une vue en plan avant montage du dispositif antidérapant suivant l'invention;
- la figure 3 est une vue en perspective d'un autre mode de réalisation d'un demi-crochet;
- la figure 4 est une vue en perspective d'un autre mode de réalisation d'une entretoise.

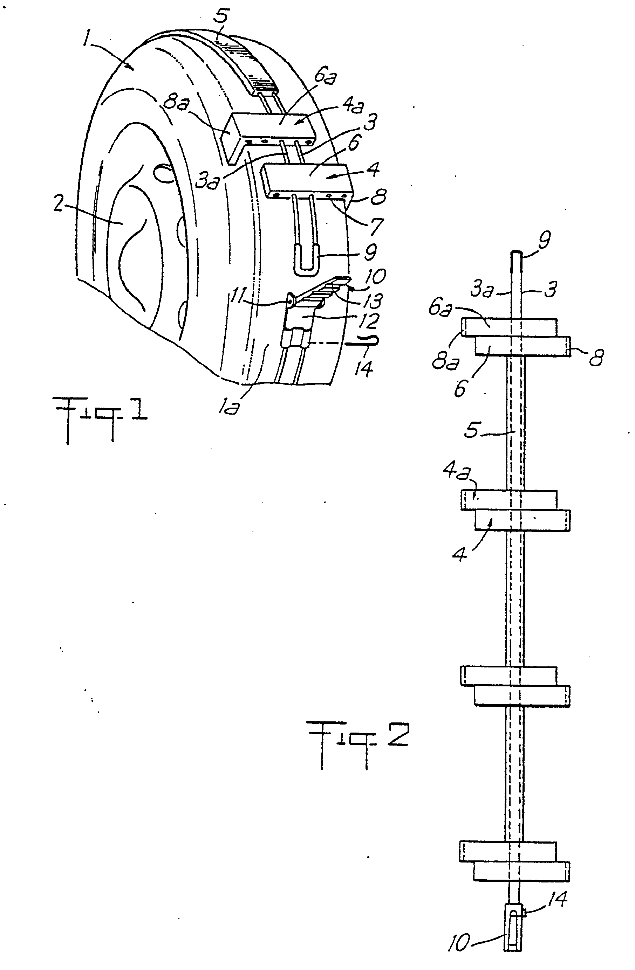

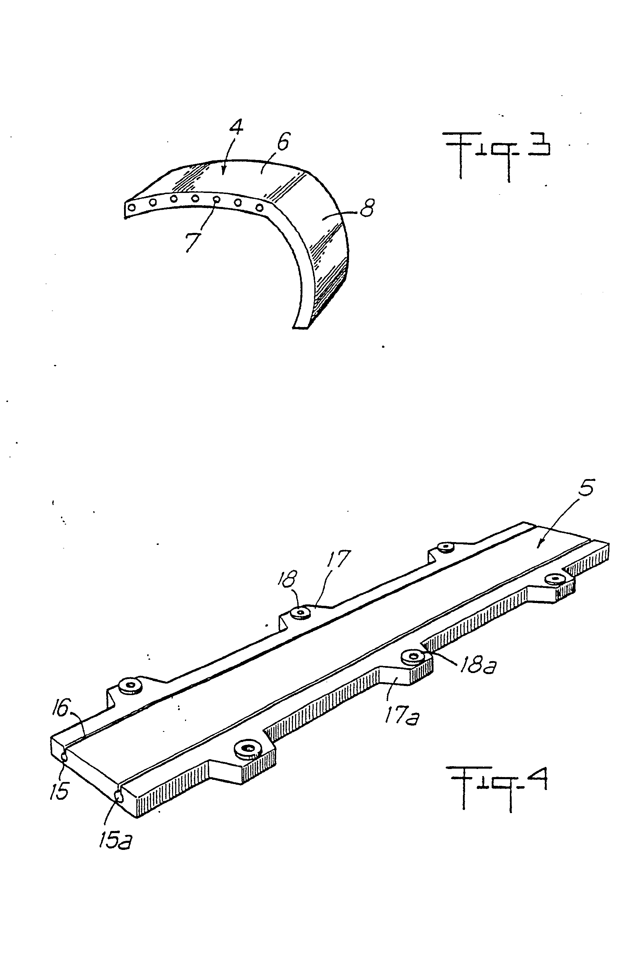

A la figure 1 on a représenté un dispositif antidérapant suivant l'invention monté sur un bandage pneumatique 1 d'une roue 2 d'un véhicule automobile. Le dispositif antidérapant comprend deux brins 3, 3a d'un câble (figures 1, 2) qui sont reliés à leurs extrémités par un moyen de liaison par accrochage afin de constituer un câble sans fin disposé autour du bandage pneumatique. Sur les brins 3, 3a du câble sont engagées de façon réglable plusieurs paires de demi-crochets 4, 4a formant crampons lesdites paires de crochets étant séparées entre elles par des entretoises 5 en contact avec la bande de roulement la du bandage pneumatique 1.

Les demi-crochets 4, 4a présentent dans l'une de leur branche 6 en contact avec la bande de roulement du bandage une série de trous 7 dans lesquels sont engagés sélectivement les deux brins 3, 3a du câble afin de permettre une modification du positionnement des deux crochets pour modifier l'écartement des crochets 4, 4a et la largeur du dispositif en fonction de la dimension du bandage pneumatique.

Les deux demi-crochets 4, 4a sont disposés symétriquement de telle sorte que leurs branches 8, 8a qui sont sensiblement perpendiculaires aux branches 6, 6a sont en appui respectivement contre les flancs opposés du bandage pneumatique.

Les entretoises 5 constituées de bandes de longueur variable sont également percées de trous longitudinaux 15, 15a dans lesquels sont engagés les brins 3, 3a du câble et elles assurent la mise à longueur de la chaîne tout en permettant un appui continu du dispositif sur le sol.

Les demi-crochets 4, 4a ainsi que les entretoises 5 sont réalisés en plastomère ou en élastomère. Le moyen de liaison par accrochage des extrémités du câble est constitué d'une boucle 9 fixée à l'une des extrémités des brins 3, 3a du cable et d'un levier 10 monté de façon articulée autour d'un axe 11 monté sur une plaque de support 12 fixée à l'autre extrémité des brins 3, 3a du câble. Le levier 10 présente une série de crans 13 dans lesquels est engagée sélectivement la boucle 9 pour régler la longueur du dispositif.

Le levier 10 se verrouille naturellement en position refermée en raison de sa forme et une épingle 14 constitue un moyen de sécurité qui bloque l'ensemble.

A la figure 3 on a représenté un autre mode de réalisation d'un demi-crochet dans lequel les branches 6 et 8 sont incurvées pour mieux épouser la bande de roulement et les flancs du bandage pneumatique.

A la figure 4 on a représenté un autre mode de réalisation d'une entretoise qui comporte deux trous longitudinaux 15, 15a dans lesquels sont engagés les brins 3, 3a du câble lesdits trous 15, 15a débouchant sur l'une des faces par des fentes 16, 16a permettant l'engagement desdits brins. Sur les deux faces latérales opposées de la bande constituant l'entretoise 5 sont prévus des bossages 17, 17a comportant des logements 18, 18a dans lesquels sont montés de façon connue des crampons ou des clous non représentés au dessin et qui sont destinés à augmenter l'adhérence du dispositif antidérapant.

Bien entendu, ces modes de réalisation de l'invention n'est pas limitatifs et l'homme de l'art pourra y apporter des modifications sans sortir pour cela du domaine de l'invention.

**Revendications**

1. Dispositif antidérapant pour bandage pneumatique de véhicule automobile comprenant au moins deux brins (3, 3a) d'un câble, reliés à leurs extrémités par un moyen d'accrochage (9, 10, 11), lesdits brins étant disposés parallèlement autour de la bande pneumatique pour former des câbles sans fin après accrochage, et plusieurs crampons, séparés entre eux par des entretoises (5) et engagés sur lesdits brins, caractérisé en ce que les crampons sont formés de plusieurs paires de demi-crochets (4, 4a), lesdits demicrochets (4, 4a) disposés par paires symétriquement par rapport au plan longitudinal de la roue comportant chacun une première branche (6, 6a) en appui contre la bande de roulement du bandage (1) et une autre branche (8, 8a) qui est en appui pour l'un des demi-crochets (4) contre l'un des flancs du bandage (1) et pour l'autre demi-crochet (4a) contre l'autre flanc du bandage pneumatique (1), en ce que les brins (3, 3a) sont disposés dans des trous longitudinaux (7, 15) situés dans les premières branches (6, 6a) des demi-crochets (4) et dans les entretoises (5) qui sont en contact avec la bande de roulement du bandage (1), et en ce que les premières branches présentent une série de trous (7) de nombre supérieur au nombre de brins.

2. Dispositif suivant la revendication 1, caractérisé en ce que les entretoises (5) sont constituées d'un bande plate présentant deux trous longitudinaux (15, 15a) dans lesquels sont engagés les deux brins (3, 3a) du câble par des fentes (16, 16a) débouchant sur l'une des faces de l'entretoise.

3. Dispositif suivant la revendication 1, caractérisé en ce que les deux brins (3, 3a) du câble présentent à l'une de leurs extrémités une boucle (9) qui est engagée dans l'un des crans (13) d'un levier (10) monté de façon articulée à l'autre extrémité des brins (3, 3a) du câble, et qui est verrouillé en position fermée en raison de sa forme, un moyen de sécurité (14) assurant le blocage.

4. Dispositif suivant la revendication 1, caractérisé en ce que la bande d'entretoise (5) présente sur ses deux bords latéraux des boosages (17, 17a) présentant des logements (18, 18a) dans lesquels sont disposés des crampons ou des clous en saillie par rapport à la surface desdites entretoises.

5. Dispositif suivant la revendication 1, caractérisé en ce que les demi-crochets (4, 4a) et les entretoises (5) sont réalisés en plastomère.

6. Dispositif suivant la revendication 1, caractérisé en ce que les demi-crochets (4, 4a) et les entretoises (5) sont réalisés en élastomère.

**Patentansprüche**

1. Gleitschutz für die Bereifung eines Automobils, umfassend mindestens zwei Kabelstränge (3, 3a), die an ihren Enden durch ein Haltemittel (9, 10, 11) verbunden sind, wobei die Stränge rund um den Reifen parallel angeordnet sind, um nach dem Festklammern Endloskabeln zu bilden, und mehrere durch Stege (5) voneinander getrennte und an den Strängen angreifende Klammern, dadurch gekennzeichnet, daß die Klammern durch mehrere Paare von Halbgreifern (4, 4a) gebildet sind, welche Halbgreifer (4, 4a) paarweise symmetrisch zur Längsebene des Rades angeordnet sind und jeweils einen ersten Schenkel (6, 6a), der sich an der Lauffläche des Reifens (1) abstützt, und einen weiteren Schenkel (8, 8a), der sich an einer der Flanken des Reifens (1) bei einem Halbgreifer (4) und an der anderen Flanke des Reifens (1) beim anderen Halbgreifer (4a) abstützt, umfassen, daß die Stränge (3, 3a) in Langlöchern (7, 15) angeordnet sind, welche sich in den ersten Schenkeln (6, 6a) der Halbgreifer (4) und in den mit der Lauffläche des Reifens (1) in Kontakt befindlichen Stegen (5) befinden, und daß die ersten Schenkel eine Reihe von Löchern (7) in einer Anzahl, die die Anzahl an Strängen übersteigt, aufweisen.

2. Vorrichtung nach Anspruch 1, dadurch gekennzeichnet, daß die Stege (5) durch ein flaches Band gebildet sind, das zwei Langlöcher (15, 15a) aufweist, in welchen die beiden Stränge (3, 3a) des Kabels über in eine der Seiten des Stegs mündende Schlitze (16, 16a) eingesetzt sind.

3. Vorrichtung nach Anspruch 1, dadurch gekennzeichnet, daß die beiden Stränge (3, 3a) des Kabels an einem ihrer Enden eine Schleife (9) aufweisen, die sich in einer der Kerben (13) eines gelenkig am anderen Ende der Stränge (3, 3a) des Kabels angeordneten Hebels (10) in Eingriff befindet, welcher aufgrund seiner Form in geschlossener Position verriegelt ist, wobei ein Sicherungsmittel (14) die Blockierung sichert.

4. Vorrichtung nach Anspruch 1, dadurch gekennzeichnet, daß das Stegband (5) an seinen beiden Seitenrändern Vorsprünge (17, 17a) aufweist, die Aufnahmen (18, 18a) darstellen, in welchen von der Oberfläche der Stege abstehende Klammern oder Nägel angeordnet sind.

5. Vorrichtung nach Anspruch 1, dadurch gekennzeichnet, daß die Halbgreifer (4, 4a) und die Stege (5) aus Plastomer sind.

6. Vorrichtung nach Anspruch 1, dadurch gekennzeichnet, daß die Halbgreifer (4, 4a) und die Stege (5) aus Elastomer sind.    -

## Claims

1. A non-skid device for pneumatic tires of motorvehicles comprising at least two strands (3, 3a) of cable, joined at their ends by fastening means (9, 10, 11), said strands being placed in parallel around the pneumatic tread so as to constitute endless cables after fastening, and several clamps, separated one from the other by cross-pieces (5), and engaged on said strands, characterized in that said clamps are constituted of a plurality of pairs of half-brackets (4, 4a), said halfbrackets (4, 4a) being placed in pairs symmetrically with respect to the longitudinal plane of the wheel, each comprising a first branch (6, 6a) resting against the tread of the tire (1) and another branch (8, 8a) which rests, for one of the half-brackets (4) against one of the flanks of the tire (1),and for the other halfbracket (4a) against the other flank of the pneumatic tire (1), in that the strands (3, 3a) are engaged into longitudinal holes (7, 15) situated in the first branches (6, 6a) of the half-brackets (4) and in the cross-pieces (5) in contact with the tread of the tire (1), and in that the first branches are provided with a series of holes (7) the number of which is greater than the number of strands.

2. Device according to claim 1, characterized in that the cross-pieces (5) are constituted of a flatstrip provided with two longitudinal holes (15, 15a) into which are engaged the two strands (3, 3a) of cable via slots (16, 16a) issuing on to one of the faces of the cross-pieces.

3. Device according to claim 1, characterized in that the two strands (3, 3a) of cable present at one of their ends a buckle (9) which is engageable in one of the notches (13) of a lever (10) mounted for pivoting at the other end of said strands (3, 3a) of cable, and which is readily closed over because of its shape, safety means (14) being provided to secure the locking.

4. Device according to claim 1, characterized in that the strip constituting the cross-piece (5) is provided on its two side faces with bosses (17, 17a) having recesses (18, 18a) for housing spikes or nails projecting with respect to the surface of said cross-pieces.

5. Device according to claim 1, characterized in that the said half-brackets (4, 4a) and said crosspieces (5) are in plastomer.

6. Device according to claim 1, characterized in that said half-brackets (4, 4a) and said cross-pieces (5) are in elastomer.

Fig. 1

Fig. 2

Fig-3

Fig-4